# DEMANDE DE BREVET EUROPEEN

(11) **EP 1 593 593 A2**
(43) Date de publication de la demande: **09.11.2005**
(21) Numéro de dépôt: 05103722.4
(22) Date de dépôt: 04.05.2005
(51) Int. Cl.: B62M 13/04

(54) **Dispositif de fixation universel d'un moteur d'entraînement pour roue**

(30) Priorité: 04.05.2004 BE 200400223
(71) Demandeur: Motte dit Falisse, Gilles Jacques Abel Marie, 4102 Liège/Ougrée (BE)
(72) Inventeur: Motte dit Falisse, Gilles Jacques Abel Marie, 4102 Liège/Ougrée (BE)
(74) Mandataire: Claeys, Pierre

(57) **Abrégé**

Dispositif de fixation universel d'un moteur d'entraînement pour roue comprenant un bras (3) comprenant des perforations (5'), un axe de pivotement (4) du moteur 7, un premier (1) et un second étrier (2) placés dos à dos et solidaire l'un de l'autre, le premier étrier (1) étant agencé pour recevoir ledit bras (3) et le second pour recevoir ledit axe (4) du moteur (7). Le dispositif comprend un premier moyen élastique (8) agencé pour maintenir un dispositif d'entraînement d'une roue contre ladite roue, et un moyen de fixation rapide dudit second étrier (2) au châssis du moteur d'entraînement (7).

## Description

La présente invention se rapporte à un dispositif de fixation universel d'un moteur d'entraînement pour roue, notamment pour roue de bicyclette.

De tels dispositifs universels existent et comprennent généralement deux parties reliées entre elles par des moyens de pivotement. Ces moyens de pivotement sont agencés pour rendre le dispositif universel et adaptable sur plusieurs types de bicyclette.

Malheureusement, de tels dispositifs sont difficiles à utiliser car s'ils sont adaptables sur tous les types de bicyclette, leurs transferts d'une bicyclette à une autre ou d'un endroit à l'autre de la même bicyclette implique un démontage complet, ce qui représente une opération lourde et pénible.

L'invention a pour but de pallier les inconvénients de l'état de la technique en procurant une invention permettant un transfert aisé d'une bicyclette à une autre ou d'un endroit à l'autre de la même bicyclette.

Pour résoudre ce problème, il est prévu suivant l'invention, un dispositif, tel qu'indiqué au début comprenant:
- un bras (3) comprenant des perforations (5') et articulé à une pièce fixée à la bicyclette,
- un axe de pivotement (4) du moteur d'entraînement (7),
- un premier (1) et un second étriers (2) placés dos à dos et solidaires l'un de l'autre, le premier étrier (1) étant agencé pour recevoir ledit bras (3) et le second pour recevoir ledit axe (4) du moteur,
- des moyens de fixation dudit premier étrier sur ledit bras,
- des moyens de fixation dudit axe du moteur audit second étrier,
- un premier moyen élastique (8) agencé pour maintenir une roue entraînée par ledit moteur contre ladite roue de véhicule, ledit premier moyen élastique (8) prenant appui sur ledit premier étrier (1), et
- un levier (13) terminé par une fourche (14) ou analogue, une dent de blocage (15) et un second moyen élastique (16), ces derniers éléments étant agencés pour constituer un moyen de fixation rapide dudit second étrier (2) à un châssis du moteur d'entraînement (7).

Ce dispositif, tout en maintenant les points de pivotement pour garder son caractère de réglage de position universel, évite de devoir démonter complètement le dispositif lors du transfert d'une bicyclette à une autre ou d'un endroit à l'autre de la même bicyclette, ou même pour ajuster correctement la position du moteur alors que le dispositif est déjà fixé.

D'autres caractéristiques, détails et avantages de l'invention ressortiront de la description donnée ci-après, à titre non limitatif et en faisant référence aux dessins annexés.

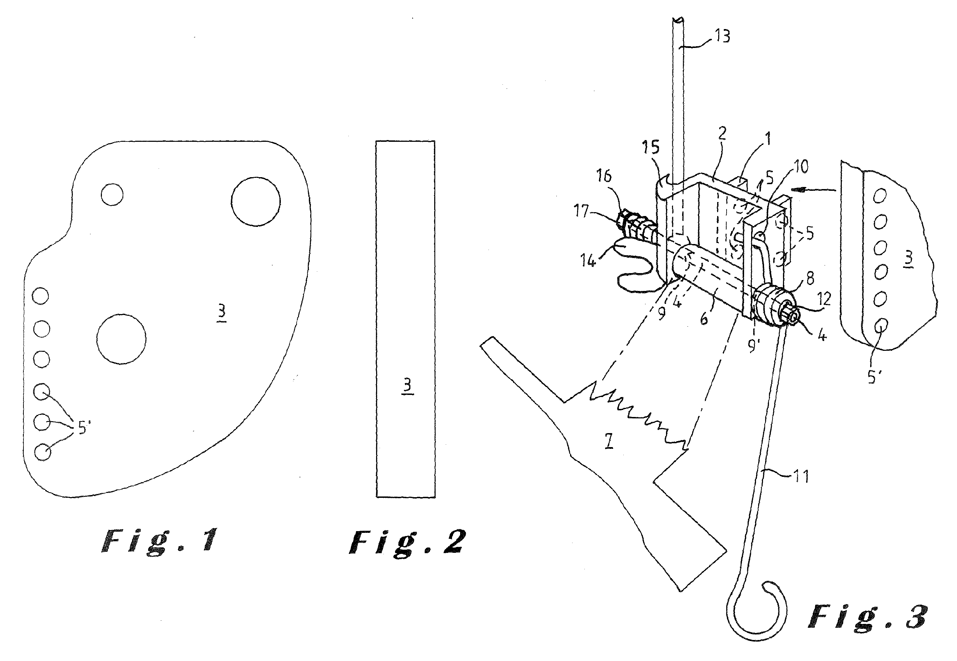

La figure 1 est une vue de côté du bras universel du dispositif selon l'invention

La figure 2 est une vue de profil de la figure 1.

La figure 3 est une vue en perspective du dispositif selon l'invention.

Sur les figures, les éléments identiques ou analogues portent les mêmes références.

La figure 3 illustre un dispositif de fixation universel d'un moteur d'entraînement pour roue, notamment pour roue de bicyclette. Ce dispositif comprend deux étriers 1 et 2 placés dos à dos. L'étrier 1, par exemple a pour fonction de fixer le dispositif sur le bras universel 3 par n'importe quel moyen de fixation. L'étrier 1 est, par exemple, perforé de quatre trous 5, permettant de recevoir des boulons et des écrous de blocage. Le bras comprend des perforations 5' effectuées de manière transversale permettant de recevoir lesdits moyen de fixation tels que lesdits boulons et écrous de blocage.

L'étrier 2 est prévu pour recevoir l'axe de pivotement 4 du moteur 7. Ledit axe 4 se place de part en part de l'étrier 2, dans le sens de sa largeur, et traverse celui-ci par deux orifices 9 et 9', lesquels orifices sont logés à la base des côtés de l'étrier 2.

Cet axe 4 du moteur reçoit, notamment, au centre de l'étrier 2, une buselure 6 qui peut tourner librement sur l'axe 4, la buselure étant l'une des extrémités du châssis du moteur 7. Sur l'axe 4, un moyen élastique (ressort) 8 vient se placer sur l'un des côtés de l'étrier 2, moyen élastique 8 qui prend appui par ancrage sur un orifice 10 placé au-dessus de l'orifice 9', permettant ainsi au moyen élastique 8, par le biais de son bras 11, d'aller prendre appui sur un point du moteur 7 et d'exercer une pression vers le bas sur ledit moteur 7.

Le moyen élastique 8 étant bloqué contre l'étrier 2, transpercé par l'axe 4 et arrêté par un écrou 12, l'axe 4 reçoit aussi, de l'autre côté dudit étrier 2, un levier 13 qui se loge à sa base dans l'axe 4 du moteur 7. Le levier 13 est muni d'une fourche 14 qui s'emboîtera, par exemple, dans le châssis du moteur 7. Le levier 13, circulant sur l'axe 4, peut être à la demande, soit placé dans une dent de blocage 15, soit, inversement, rester libre en dehors de la dent de blocage. Le levier 13 est maintenu sur l'étrier 2 par un moyen élastique, par exemple un ressort 16, qui est placé lui aussi sur l'axe 4. Ledit levier 13 terminé par la fourche 14, la dent de blocage 15 et ledit moyen élastique 16 sont agencés pour constituer un moyen de fixation rapide dudit second étrier 2 au châssis du moteur d'entraînement 7. Le moyen élastique 16 exerce une pression sur la base du levier 13. Une rondelle à palier 17 vient alors se placer et cette dernière prend appui au centre du ressort, permettant de maintenir le moyen élastique 16 bien centré sur l'axe 4 et par rapport au levier 13.

On pourrait imaginer de remplacer l'étrier 2 par un tenon perforé et munir le bras universel d'une mortaise correspondante.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif de fixation universel d'un moteur d'entraînement pour roue de véhicule, en particulier de bicyclette comprenant:
- un bras (3) comprenant des perforations (5') et articulé à une pièce fixée à la bicyclette,
- un axe de pivotement (4) du moteur d'entraînement (7),
- un premier (1) et un second étriers (2) placés dos à dos et solidaires l'un de l'autre, le premier étrier (1) étant agencé pour recevoir ledit bras (3) et le second pour recevoir ledit axe (4) du moteur,
- des moyens de fixation dudit premier étrier sur ledit bras,
- des moyens de fixation dudit axe du moteur audit second étrier,
- un premier moyen élastique (8) agencé pour maintenir une roue entraînée par ledit moteur contre ladite roue de véhicule, ledit premier moyen élastique (8) prenant appui sur ledit premier étrier (1), et
- un levier (13) terminé par une fourche (14) ou analogue, une dent de blocage (15) et un second moyen élastique (16), ces derniers éléments étant agencés pour constituer un moyen de fixation rapide dudit second étrier (2) à un châssis du moteur d'entraînement (7).
